# EUROPEAN PATENT APPLICATION

(11) **EP 2 746 035 A1**
(43) Date of publication of application: **25.06.2014**
(21) Application number: 13196617.8
(22) Date of filing: 11.12.2013
(51) Int. Cl.: B29D 30/20

(54) **Method and apparatus for building a tire**

(30) Priority: 18.12.2012 US 201261738607 P
(71) Applicant: The Goodyear Tire & Rubber Company, Akron, Ohio 44316 (US)
(72) Inventor: Currie, William Dudley, Stow, OH Ohio 44224 (US); Burg, Gary Robert, Massillon, OH Ohio 44646 (US); Henthorne, David Alan, Copley, OH Ohio 44321-1752 (US)
(74) Representative: Kutsch, Bernd

(57) **Abstract**

A tire building system (10) is disclosed comprising a first loop (12) of travel track (11); a plurality of first carriage housings (20) movably mounted on the first loop (12); a second loop (15) of travel track (11); a plurality of second carriage housings (30) movably mounted on the second loop (15); and a first transfer station (206) of the first loop (12) and a second transfer station (307) of the second loop (15) for interrelating the first loop (12) and the second loop (15). Also, a method for building an uncured pneumatic tire is disclosed. The method comprises: electronically controlling movement of a plurality of first carriage housings (20) about a first rail loop (12); maintaining each first carriage housing (20) at a component application station (201, 202, 203, 204, 205) for a predetermined duration and moving each first carriage housing (20) to a succeeding component application station; receiving a carcass component by each first carriage housing (20) at each component application station (201, 202, 203, 204, 205) of the first rail loop (12); electronically controlling movement of a plurality of second carriage housings (30) about a second rail loop (15); maintaining each second carriage housing (30) at a component application station (301, 302, 303, 304, 305) for a predetermined duration and moving each second carriage housing (30) to a succeeding component application station; receiving a belt/tread component by each second carriage housing (30) at each component application station (301, 302, 303, 304, 305) of the second rail loop (15) thereby assembling a belt/tread from belt/tread components; transferring the belt/tread to a first carriage housing (20); securing the belt/tread to a carcass to complete an uncured pneumatic tire; and unloading the uncured pneumatic tire from the first carriage housing (20).

## Description

### Field of Invention

The present invention relates to a method and apparatus for making tires such as pneumatic tires.

More particularly, the present invention relates to an apparatus and method by which a tire building drum is mounted on a movable carriage, and the carriage is moved to, and past, a successive series of servers, each of which presents one or more components that are wound onto the tire assembly drum.

### Background of the Present Invention

A conventional tire building apparatus has a carriage on which a tire assembly drum is mounted. The carriage may be precisely located at a series of sequential operation stations to receive the components for a tire. The tire assembly drum may cooperate with a drum support mounted on the carriage, and, selectively, with an independently mounted component dispenser adapted to position at least one bead bundle, belts, and treadstock with respect to the tire assembly drum. As the drum expands from its cylindrical to its toroidal configuration, the components carried on the component dispenser may be precisely and firmly engaged by those on the assembly drum such that support of the components presented by the component dispenser may be effectively transferred to the drum, while maintaining the accuracy of their relative positions. Such an apparatus is disclosed in US-A-4,314,864.

Prior to this conventional apparatus, multiple components required to build a pneumatic tire had been assembled on a tire building drum rotatably mounted in front of a human operator. The components had been presented by individual servers or component racks located to the side of the tire building drum opposite the operator or adjacent to her/him. The operator may then rotate the drum and, by the use of mechanical aids, guide the successive components into their proper position on the tire assembly drum.

This had been the traditional method and apparatus for making bias ply tires. However, radial tires may require very precise placement of the various components and, for production runs, require the ability to repeat accurately the placement of components. Bias ply tires may be assembled in their entirety as a cylindrical band and then shaped and cured in a mold. The casing for a radial tire, however, must generally be shaped to its toroidal configuration prior to placement of the inextensible bands that underlie the treadstock. Hence, radial tires have been built by a two-stage process. That is, the components, except for the belts and treadstock, may be assembled on a first drum, the beads are set in place, and the resulting cylindrical band removed and mounted on a second drum which expands the band into a toroidal casing, whereupon the belts and treadstock may be applied.

It may, therefore, be desirable to build an entire tire on a single-stage drum so that the green tire is completed before removal. It has, however, heretofore been difficult to achieve accurate bead placement and accurate belt placement on the same drum, largely because of the multiplicity of servers required at a single location and the multiple guides required to place components on a cylindrical surface and later components on a toroidal surface at the same location, while relating placement of all components to a single reference plane transversely of the rotational axis of the finished product. Changeovers for differing tire constructions have also heretofore been extremely complicated

### Summary of the Present Invention

The invention relates to a system in accordance with claim 1 and to a method in accordance with claim 9.

Dependent claims refer to preferred embodiments of the invention.

A tire building system in accordance with the present invention includes a first loop of travel track, a plurality of first carriage housings movably mounted on the first loop, a second loop of travel track, a plurality of second carriage housings movably mounted on the second loop, and a first transfer station of the first loop and a second transfer station of the second loop for interrelating the first loop and the second loop.

According to another aspect of the tire building system, the first carriage housings include full-stage tire building drums.

According to still another aspect of the tire building system, the second carriage housings include breaker and tread drums.

According to yet another aspect of the tire building system, a plurality of first fixed component application stations are associated with the first loop and a plurality of second fixed component application stations are associated with the second loop.

According to still another aspect of the tire building system, the plurality of first fixed component application stations include an innerliner application station, a ply application station, a bead application station, and a transfer station associated with the second loop.

According to yet another aspect of the tire building system, the plurality of second fixed application stations include a breaker application station, a tread element application station, and a transfer station associated with the first loop.

According to still another aspect of the tire building system, the first carriage housings travel along the first loop serially engaging a plurality of first fixed application stations and receiving a component at each first fixed application station.

According to yet another aspect of the tire building system, the second carriage housings travel along the second loop serially engaging a plurality of second fixed application stations and receiving a component at each second fixed application station.

According to still another aspect of the tire building system, a first carriage housing receives a belt/tread component from the second loop at the first transfer station.

According to yet another aspect of the tire building system, a second carriage housing supplies a belt/tread component to the first loop at the second transfer station.

A method in accordance with the present invention builds an uncured pneumatic tire. The method includes the steps of: electronically controlling movement of a plurality of first carriage housings about a first rail loop; maintaining each first carriage housing at a component application station for a predetermined duration and moving each first carriage housing to a succeeding component application station; receiving a carcass component by each first carriage housing at each component application station of the first rail loop; electronically controlling movement of a plurality of second carriage housings about a second rail loop; maintaining each second carriage housing at a component application station for a predetermined duration and moving each second carriage housing to a succeeding component application station; receiving a belt/tread component by each second carriage housing at each component application station of the second rail loop thereby assembling a belt/tread from belt/tread components; transferring the belt/tread to a first carriage housing; securing the belt/tread to a carcass to complete an uncured pneumatic tire; and unloading the uncured pneumatic tire from the first carriage housing.

According to another aspect of the method, the component application stations of the first loop include an innerliner application station, a ply application station, a bead application station, and a transfer station associated with the second loop.

According to still another aspect of the method, the component application stations of the second loop include a breaker application station, a tread element application station, and a transfer station associated with the first loop.

According to yet another aspect of the method, the first carriage housings travel along the first loop serially engaging a plurality of first component application stations and receiving a component at each component application station.

According to still another aspect of the method, the second carriage housings travel along the second loop serially engaging a plurality of second component application stations and receiving a component at each second component application station.

According to yet another aspect of the method, the method further includes the step of receiving a belt/tread component from the second loop by a first carriage housing at a transfer station of the first rail loop.

According to still another aspect of the method, the method further includes the step of supplying a belt/tread component to the first rail loop by a second carriage housing at a transfer station of the second rail loop.

According to yet another aspect of the method, the electronically controlling steps further include the step of wirelessly controlling movement of the first and second carriage housings by a centralized supervisory controller disposed at a fixed location between the first rail loop and the second rail loop.

According to still another aspect of the method, the component applications of the first rail loop and the second rail loop include a gear pump.

According to yet another aspect of the method, the method further includes the step of building uncured pneumatic tires in lot sizes of one.

### Brief Description of the Drawings

FIG. 1 is a schematic perspective view of a tire building apparatus embodying the concepts of the present invention.
FIG. 2 is a schematic perspective view of part of the apparatus of FIG. 1.
FIG. 3 is a schematic perspective view of another part of the apparatus of FIG. 1.

### Description of Examples of the Present Invention

A tire building system, assembly and/or apparatus in accordance with a preferred embodiment of the present invention is self-contained and may be part of a larger system for assembling, curing, and processing, and finishing, for example, up to 2,000 tires per day of a family of tires with similar characteristics and similar rubber compounds. Up to 20 SKUs may be assembled simultaneously in up to two bead diameters, e.g., 17" and 18" with a cycle time, or takt, of 35 seconds or less. All tire components except beads may be assembled by the tire building assembly. Material inputs to the system may include ply cord, breaker or belt wire, beads (already wound to, for example, 17" and/or 18" diameter), rubber compound, and/or plastic film for innerliner from rolls of width equal to the tire circumference (for example, one roll of plastic film for 17" tires, one roll for 18" tires).

The system is arranged, for example, into two closed assembly loops, or lines, (e.g., rectangular, circular, triangular, etc.) around which may pass a series of carriage housings with either full-stage tire building drums (carcass drums) and/or breaker and tread drums (B&T drums) mounted to them. These housings may travel on precision rails driven along a travel track using servo motors that may power pinions engaging fixed tracks of fixed component application stations at various locations along each loop. The housings may stop at these predetermined station locations along a path for interaction with the fixed component application stations to add tire components to the drum.

For example, the carcass drums operate in a first rectangular carcass loop and the B&T drums operate in a second rectangular B&T loop. A fixed transfer station assembles the breaker and tread components from a B&T drum onto a carcass drum, to which the carcass components (chafer, innerliner, ply, beads, and/or sidewall) have already been applied. When a carriage housing reaches a predetermined termination location of the first or second loop, the carriage housing enters a shuttle system for transport to the other loop. There may be, for example, three shuttles in the system. A first shuttle may service the carcass carriage housings, a second shuttle may service B&T carriage housings, and a third shuttle, which may be located at a position adjacent each loop (e.g., a center of the system), may be shared by both the carcass and B&T loops. All tire-building operations may be fully automatic and "hands off" by operators.

The number of drums in the system is dependent on the number of component application stations. There may be one drum for each component or each component application station. However, more than one component, shorter application times, may be applied at a single component application station. The system may include short spur tracks onto which the carriage housings may be located. These spur tracks may be used to exchange a carriage housing in a particular build sequence. For example, a carriage housing with a 17" drum may exit the system and a carriage housing with an 18" drum may enter the system. These spur tracks may also transport a carriage housing out of the system for maintenance, drum changes, mechanical repairs, etc.

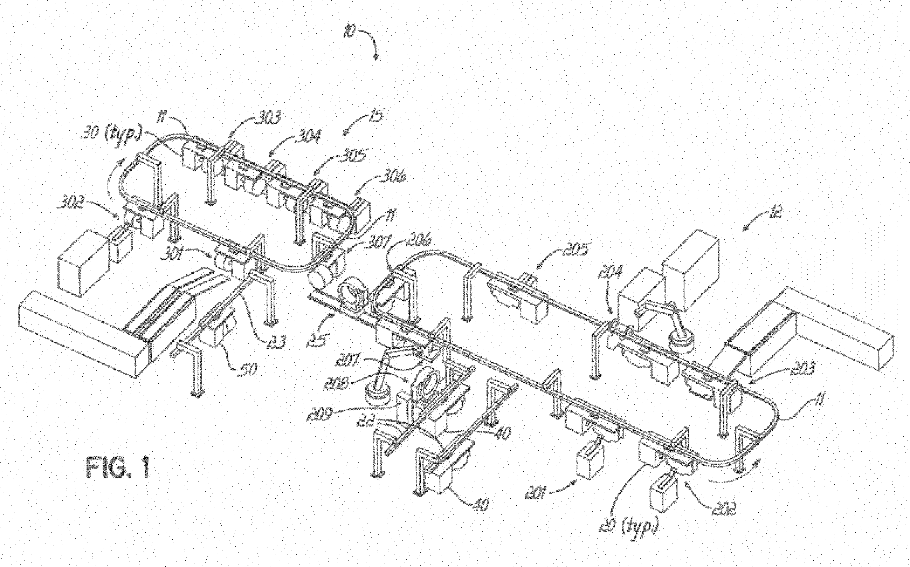

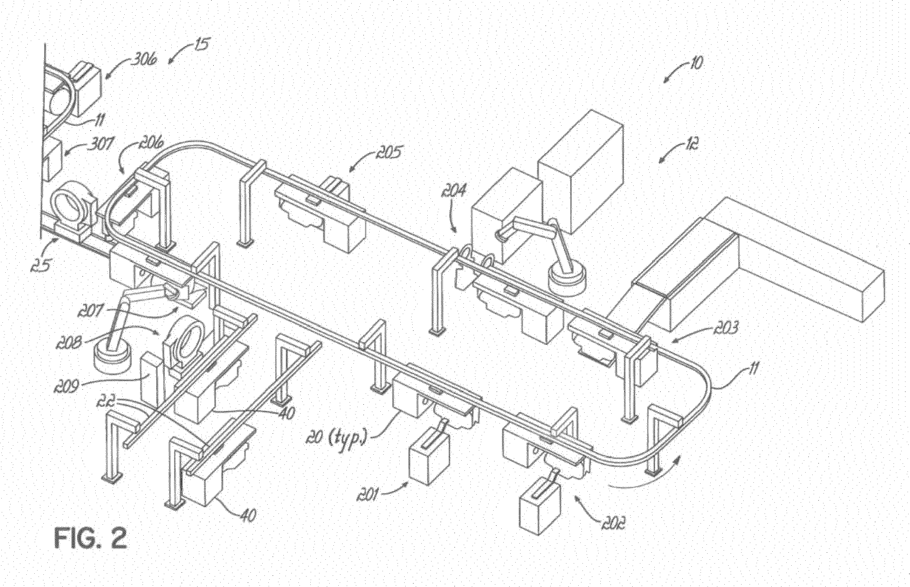

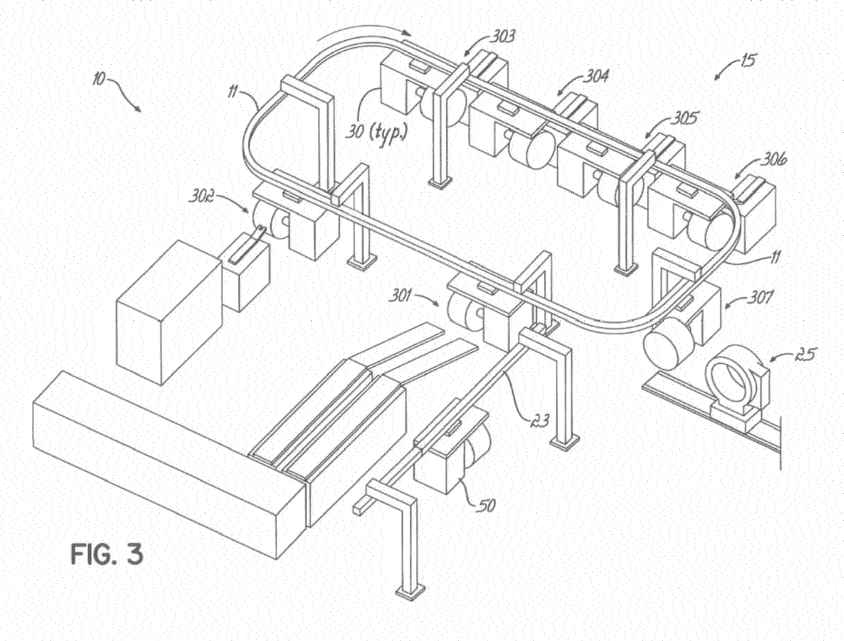

The example layout of FIGS. 1-3 may for instance have seven carcass housings 20 movably mounted on a carcass loop 12 comprising a loop of travel track 11 and six B&T housings 30 movably mounted on a B&T loop 15 comprising a loop of travel track 11 in the system 10 with two additional carcass housings 40 and one additional B&T housing 50 in reserve on spur tracks, 22, 23 waiting to enter the system as a drum diameter change may be required to build an upcoming tire. If enough floor space is available, the system 10 may be expandable by addition of travel track 11 and carriage housings 20, 30 for additional tire components and their respective application stations. These additional carriage housings 20, 30 may thus allow the system 10 to maintain the 35 second cycle time or takt. For example, for addition of an overlay to an upcoming SKU, the travel track 11 may be lengthened to provide space for the overlay application station and one additional carriage housing 30 with a B&T drum may be added to the system 10.

Gum components may be applied using gear pump technology to apply a rubber compound in thin, narrow strips wound on a drum to form the tire component. Gear pumps may be used for innerliner (if a sheet of plastic film is not used), chafer, sidewall, tread base, tread chimney, tread cap, and possibly shoulder strips for ply and/or breaker. Various carcass plies may be produced on demand using cord and compound assembled into the ply by a conventional ply maker unit. Breakers may be produced on demand using breaker wire and compound assembled into breakers using a conventional breaker maker unit. Other stations may include a transfer ring for transporting a B&T package from the B&T loop to a full-stage carcass drum of the carcass loop, a stitching station, a bead setting station, and/or a green tire unloading station.

Each carriage housing may be a semi-autonomous assembly including an electrical panel with a PLC processor for controlling some or all of the carriage functions. Servo drives for drum rotation, drum width adjustment (for full-stage carcass drums), drum diameter adjustment (for B&T drums), and carriage movement on the travel track may also be located in the on-board electrical panels of the carriage housings. The carcass carriage housings may have an on-board air compressor with a reservoir tank and a vacuum pump to provide pneumatic functions for the full-stage carcass drums. Power may be supplied to each carriage housing by a fixed power rail on the base of the travel track with two sets of power collectors mounted on each carriage housing. Because the drum drives and pneumatic equipment may be powered at all times, some tire building operations, such as drum spotting and ply turn-ups, may be conducted as the carriage housings travel between component application stations (e.g., thereby reducing cycle time or takt).

Movement of the carriage housing in the direction along the travel track may be defined as X axis movement or axial movement. Movement of a component applier of the component application station toward or away from a drum, perpendicular to the travel track, may be defined as Y axis or radial movement. Gear pumps may be mounted on X-Y gear pump tables to provide axial and radial movement of the gear pump head while the carriage housing stays fixed. Alternatively, the gear pumps may be mounted on tables with only Y axis or radial movement. Axial movement requirements may be provided by axial movement of the carriage housings. This may allow elimination of several gear pump table servo motors.

Communication between the mobile carriage housings and the component application stations may be routed through a centralized "supervisory" PLC located at a fixed panel on the production floor. Wireless Ethernet connections may provide communication to the moving carriage housings. Safety tag information may also be passed over wireless connections to and from the carriage housings.

Some applied components, such as those applied by gear pumps, may require coordinated motion combining several servo axes to follow a designated motion profile for proper component placement. A gear pump Y axis, gear pump head rotational axis, the carriage housing X axis, and drum rotational axis may all thereby be coordinated. Data for the motion profile may be passed to the carriage housings over the wireless network.

The system may assembly green tires in a lot size of one. With the exception of beads, all other tire components may be produced by the system. Thus, each green tire may be assembled differently from the green tire assembled previously or subsequently. The system may further build green tires from a single or common "family" definition of tire SKUs.

Example boundaries for a family definition may include two bead diameter sizes (e.g., 17 & 18 inch), a limited range of tire widths and aspect ratios, a common ply cord, a common breaker wire, a common bead cross-section, and common rubber compounds. Up to 20 different SKUs may be built by the system simultaneously with a lot size of one. A pull-based operating system may be implemented. For example, when a curing press loads a green tire from the system, the curing press may signal the system to begin assembly for another tire of that SKU.

The example system 10 thus provides tire building drums traveling around two for instance rectangular-shaped loops 12, 15 or paths with a transfer ring 25 interrelating the loops. The system 10 may rely on the travel track 11 for the precise placement and support of the carriage housings 20, 30 at all times.

As shown in FIGS. 1-3, the carcass loop 12 of the example system 10 includes a first toeguard/chafer application station 201, a second innerliner application station 202, a third ply application station 203, a fourth bead loader/setter application station 204, a fifth sidewall application station 205, a sixth transfer station 206 for receiving the belt/tread from the B&T loop 15 via the transfer ring 25, a seventh stitching station 207 for attaching the belt/tread to the carcass and completing the green tire, and an eighth unloading station 208 for unloading the assembled green tire from the system and registering the green tire by a bar code reader 209.

The B&T loop 15 of the example system 10 includes a first dual belt application station 301, a second gumstrip application station 302, a third tread element application station 303, a fourth tread element application station 304, a fifth tread element application station 305, a sixth tread element application station 306, and a seventh transfer station 307 for transferring the belt/tread to the carcass loop 12 via the transfer ring 25.

From the foregoing description it should be apparent that the subject tire building apparatus achieves the desired precise alignment of a tire assembly drum with a plurality of servers at a successive series of operation stations to accomplish accurate placement of the tire components on the drum and otherwise also accomplish the objects of the invention.

## Claims

1. A tire building system comprising:
a first loop (12) of travel track (11);
a plurality of first carriage housings (20) movably mounted on the first loop (12);
a second loop (15) of travel track (11);
a plurality of second carriage housings (30) movably mounted on the second loop (15); and
a first transfer station (206) of the first loop (12) and a second transfer station (307) of the second loop (15) for interrelating the first loop (12) and the second loop (15).

2. The tire building system as set forth in claim 1 wherein the first carriage housings (20) include one or more full-stage tire building drums.

3. The tire building system as set forth in claim 1 or 2 wherein the second carriage housings (30) include one or more breaker and tread drums.

4. The tire building system as set forth in claim 1 including a plurality of first fixed component application stations (201, 202, 203, 204, 205) associated with the first loop (12) and a plurality of second fixed component application stations (301, 302, 303, 304, 305) associated with the second loop (15).

5. The tire building system as set forth in claim 4 wherein the plurality of first fixed component application stations (201, 202, 203, 204, 205) includes an innerliner application station (202), a ply application station (203), a bead application station (204), and the first transfer station (206) associated with the second loop (15).

6. The tire building system as set forth in claim 4 or 5 wherein the plurality of second fixed application stations (301, 302, 303, 304, 305) includes a breaker application station (301), a tread element application station (303), and the second transfer station (307) associated with the first loop (12).

7. The tire building system as set forth in at least one of the previous claims wherein the system is designed such that first carriage housings (20) travelling along the first loop (12) serially engage a plurality of first fixed application stations (201, 202, 203, 204, 205) and receive a component at each first fixed application station (201, 202, 203, 204, 205) and/or such that the second carriage housings (30) travelling along the second loop (15) serially engage a plurality of second fixed application stations (301, 302, 303, 304, 305) and receive a component at each second fixed application station (301, 302, 303, 304, 305).

8. The tire building system as set forth in at least one of the previous claims wherein the system (10) is designed such that a first carriage housing (20) receives a belt/tread component from the second loop (15) at the first transfer station (206) and/or a second carriage housing (30) supplies a belt/tread component to the first loop (10) at the second transfer station (307).

9. A method for building an uncured pneumatic tire, the method comprising the steps of:
electronically controlling movement of a plurality of first carriage housings (20) about a first rail loop (12);
maintaining each first carriage housing (20) at a component application station (201, 202, 203, 204, 205) for a predetermined duration and moving each first carriage housing (20) to a succeeding component application station;
receiving a carcass component by each first carriage housing (20) at each component application station (201, 202, 203, 204, 205) of the first rail loop (12);
electronically controlling movement of a plurality of second carriage housings (30) about a second rail loop (15);
maintaining each second carriage housing (30) at a component application station (301, 302, 303, 304, 305) for a predetermined duration and moving each second carriage housing (30) to a succeeding component application station;
receiving a belt/tread component by each second carriage housing (30) at each component application station (301, 302, 303, 304, 305) of the second rail loop (15) thereby assembling a belt/tread from belt/tread components;
transferring the belt/tread to a first carriage housing (20);
securing the belt/tread to a carcass to complete an uncured pneumatic tire; and
unloading the uncured pneumatic tire from the first carriage housing (20).

10. The method as set forth in claim 9 wherein the component application stations (201, 202, 203, 204, 205) of the first loop (12) include an innerliner application station, a ply application station, a bead application station, and a transfer station associated with the second loop (15); and/or wherein the component application stations (301, 302, 303, 304, 305) of the second loop (15) include a breaker application station, a tread element application station, and a transfer station associated with the first loop (12).

11. The method a set forth in claim 9 or 10 wherein the first carriage housings (20) travel along the first loop (12) serially engaging a plurality of first component application stations (201, 202, 203, 204, 205) and receiving a component at each component application station (201, 202, 203, 204, 205); and/or the second carriage housings (30) travel along the second loop (15) serially engaging a plurality of second component application stations (301, 302, 303, 304, 305) and receiving a component at each second component application station (301, 302, 303, 304, 305).

12. The method as set forth in at least one of the previous claims 9-11 further including the step of receiving a belt/tread component from the second loop (15) by a first carriage housing (20) at a transfer station (206) of the first rail loop (12); and/or further including the step of supplying a belt/tread component to the first rail loop (12) by a second carriage housing (30) at a transfer station (307) of the second rail loop (15).

13. The method as set forth in at least one of the previous claims 9-12 wherein the electronically controlling steps further include the step of:
wirelessly controlling movement of the first and second carriage housings (20, 30) by a centralized supervisory controller disposed at a fixed location preferably between the first rail loop (12) and the second rail loop (15).

14. The method as set forth in at least one of the previous claims 9-13 wherein the component applications of the first rail loop (12) and the second rail loop (15) include one or more gear pumps.

15. The method as set forth in at least one of the previous claims 9-14 further including the step of building uncured pneumatic tires in lot sizes of one.
